Europäisches Patentamt

European Patent Office

Office européen des brevets

(11) Veröffentlichungsnummer : **0 177 703**
**B1**

(12) **EUROPÄISCHE PATENTSCHRIFT**

(45) Veröffentlichungstag der Patentschrift :
19.07.89

(51) Int. Cl.⁴ : **G 03 B 27/62**, G 03 D 15/10

(21) Anmeldenummer : 85109766.7

(22) Anmeldetag : 02.08.85

(54) Verfahren zum automatischen Feststellen der Lagen der Bildstege bei einem Umkehrfilm und Vorrichtung zur Durchführung des Verfahrens.

(30) Priorität : 08.10.84 DE 3436874

(43) Veröffentlichungstag der Anmeldung :
16.04.86 Patentblatt 86/16

(45) Bekanntmachung des Hinweises auf die Patenterteilung : 19.07.89 Patentblatt 89/29

(84) Benannte Vertragsstaaten :
AT BE CH FR GB IT LI LU NL SE

(56) Entgegenhaltungen :
DE–A– 1 797 439
DE–A– 1 799 023
DE–A– 1 953 014
DE–B– 1 285 317

(73) Patentinhaber : GEIMUPLAST PETER MUNDT GmbH & Co. KG
Partenkirchner Strasse 50
D-8105 Farchant (DE)

(72) Erfinder : Fruth, Rupert, Dipl.-Ing.
Höllentalstrasse 20
D-8100 Garmisch-Partenkirchen (DE)
Erfinder : Stemmer, Gottfried
Münchner Strasse 39
D-8100 Garmisch-Partenkirchen (DE)
Erfinder : Pohl, Claus, Dipl.-Ing.
Haidestrasse 1
D-8116 Eschenlohe (DE)

(74) Vertreter : Lorenz, Eduard et al
Rechtsanwälte Eduard Lorenz - Bernhard Seidler
Margrit Seidler - Dipl.-Ing. Hans-K. Gossel Dr. Ina
Philipps - Dr. Paul B. Schäuble Dr. Siegfried Jackermeier
Widenmayerstrasse 23 D-8000 München 22 (DE)

## Beschreibung

Die Erfindung bezieht sich auf ein Verfahren gemäß dem Oberbegriff des Patentanspruchs 1.

Nach einem solchen Verfahren arbeitende Vorrichtungen sind aus der DE-OS 14 97 389 und aus der DE-OS 17 97 439 bekannt.

Bei der bekannten Einrichtung gemäß der DE-OS 14 97 389 werden die von der optoelektronischen Einrichtung gelieferten Analogspannungen analog weiterverarbeitet, und für die Anwendung bei Negativfilmen gilt der erste Transparenzabfall nach einem maximalen Transparenzwert als Kriterium für das Vorhandensein einer Bildkante, d. h. eines Übergangs zwischen einem Bildfeld und einem Bildsteg. Hierbei wird angenommen, daß der maximale Transparenzwert innerhalb eines einer Bildlänge entsprechenden Intervalls nur an dem zwei Bildfelder trennenden Steg auftreten kann. Um die Kante dieses Steges, die gleichzeitig Bildkante ist, zu ermitteln, wird von der Annahme ausgegangen, daß zumindest bei kopierfähigen Negativen unmittelbar am Bildrand eine um einen Mindestwert von z. B. 3 % höhere Schwärzung auftritt, als in dem Steg. Diese Annahme ist jedoch nicht immer erfüllt, und es wird dann mit der Einrichtung gemäß der vorgenannten DE-OS keine einwandfreie Erkennung und Zentrierung des Bildrandes erzielt. Das gleiche gilt auch für Umkehrfilme, bei denen die Stege als Ort des Kleinstwertes der photoelektrisch ermittelten Transparenz über der Filmlänge innerhalb eines von der Bildfeldlänge abhängigen Intervalls ermittelt werden und als vordere Bildkante die erste Stelle mit einem Transparenzanstieg angenommen wird.

Zur zuverlässigeren Erkennung von Bildstegen wurde die Einrichtung nach der DE-OS 14 97 389 gemäß der DE-OS 17 97 439 mit einer zweiten Abtaststelle versehen, die einen Transparenzabfall bzw. -anstieg vorgegebener Mindestgröße auf einen Extremwert als hintere Bildkante erkennt. Auch hier wird die von der optoelektronischen Einrichtung gelieferte Analogspannung analog weiterverarbeitet.

Die beiden vorgenannten Einrichtungen sind aufgrund der analogen Signalverarbeitung aufwendig und zudem störanfällig, wobei sich ein besonders hoher Aufwand infolge der zweiten Abtaststelle bei der Einrichtung nach der DE-OS 17 97 439 ergibt. Außerdem vermögen die beiden bekannten Einrichtungen nicht zuverlässig zwischen den Bildstegen und sich im Bildfeld bildstegartig darstellenden, aufgenommenen Gegenständen, z. B. schwarzen Pfosten, zu unterscheiden, so daß es — bei der DE-OS 17 97 439 trotz der zweiten Abtaststelle — zu Fehlerkennungen kommen kann.

Aus der DE-B-12 85 317 ist ein Verfahren zum automatischen Erkennen der einen Filmstreifen in Bildfelder aufteilenden Stege bekannt, bei dem die Stege jeweils als Ort des Kleinstwertes bei Umkehrfilmen oder randbelichteten Negativfilmen und des Größtwertes bei Negativfilmen der fotoelektrisch ermittelten Transparenzkurve über die Filmlänge innerhalb eines höchstens der maximalen Bildfeldlänge plus maximaler Stegbreite entsprechenden Intervalls ermittelt werden. Hierdurch soll den Schwierigkeiten begegnet werden, die dadurch entstehen, daß beispielsweise bei Negativfilmen die Bildkante nicht immer als scharfer Übergang von einem Bereich geringer Durchlässigkeit zu einem Bereich hoher Durchlässigkeit vorliegt. Bei dem aus der DE-B-12 85 317 vorbekannten Verfahren wird jedoch immer nur der zuletzt ermittelte « extremste » Digitalwert gespeichert und mit dem folgenden Wert verglichen, wobei der erste festgestellte Extremwert als Bildkante angesehen wird. Es wird also lediglich auf das Auftreten einer möglichen Bildkante geprüft.

Die der Erfindung zugrundeliegende Aufgabe besteht darin, das Verfahren gemäß Gattungsbegriff des Patentanspruchs 1 so zu verbessern, daß Verwechslungen zwischen Bildstegen und bildstegartigen Aufnahmeteilen mit Sicherheit ausgeschlossen sind und das Verfahren dennoch mit einem unkomplizierten, störungssicheren apparativen Aufwand durchgeführt werden kann.

Die vorstehende Aufgabe wird durch die im Kennzeichnungsteil des Anspruchs 1 genannten Merkmale gelöst.

Bei dem erfindungsgemäßen Verfahren ist aufgrund der Digitalisierung in dem Signalfluß hinter dem analog/digital-Konverter immer ein unverwechselbarer Unterschied zwischen Werten, die einem Steg angehören könnten, und solchen, die einem sich im Bildfeldteil stegartig darstellenden Aufnahmeteil angehören könnten, vorhanden, weil sich die extremste Bildtransparenz stets — wenn auch wenig — von der außerhalb des möglichen Transparenzbereichs im Bildfeld liegenden Stegtransparenz unterscheidet und dieser geringe Unterschied bei der Digitalisierung eindeutig erfaßt und bei der Weiterbehandlung der Signale störungssicher aufrechterhalten wird. Dadurch, daß gemäß der Erfindung die Digitalwerte von mehreren normalen Bildlängen gespeichert werden und so einfach miteinander verglichen werden können und daß ferner die Häufigkeit von unmittelbar aufeinanderfolgenden Digitalextremwerten in die Bewertung mit einbezogen wird, ist darüberhinaus eine klare Unterscheidung zwischen unbelichteten Bildteilen und Stegteilen auf dem Film zuverlässig gewährleistet. Überbelichtete Filmpartien stellen sich mit weit von den überhaupt möglichen Extremwerten für die Transparenz von Stegen dar, so daß auch solche Filmpartien selbst dann, wenn sie sich über mehr als die datenmäßig erfaßte Vorschublänge des Films erstrecken, klar erkennbar sind. Für die digitale Erfassung und Weiterbehandlung der von der optoelektronischen Abtasteinrichtung, Taktgebern des Vorschubs usw. gelieferten Signale stehen die seit langem bekannten preisgünstigen integrierten Schaltungen zur Verfügung, mit denen der für die Realisierung des erfindungsgemäßen Verfahrens nötige apparative Aufwand sehr gering gehalten werden kann. Die Unteransprüche 2 bis 6 betreffen bevorzugte Ausgestaltungen des Verfahrens gemäß Anspruch 1.

Die Maßnahme nach Anspruch 2 ermöglicht es, ausgehend von den tatsächlich ermittelten Stegen auch Stege zu erkennen, die sich beim Vorbeilaufen an der optoelektronischen Einrichtung beispielsweise wegen zu geringer Stegbreite nicht dargestellt haben, oder auf eine brauchbare Bildfeldlänge von Bildfeldern zu schließen, zwischen denen eine geringfügige Überlappung besteht, so daß dort der Bildsteg gänzlich fehlt.

Die Maßnahme gemäß Anspruch 3 hat den Vorteil, daß nur der Transparenzbereich eines Films digitalisiert und weiterbehandelt zu werden braucht, der für die Erkennbarkeit von Stegen eine Rolle spielt, so daß z. B. ein digital/analog-Konverter niedrigerer Wertigkeit für die Erzielung der feinen Abstufung ausreicht, die nötig ist, um die relativ geringen Unterschiede zwischen der Stegtransparenz und der extremsten Transparenz in einem Bildflächenteil mit einer sicheren Auflösung zu erfassen. Die Weiterbehandlung nur dieses vorgenannten Transparenzbereiches in der weiteren Datenverarbeitungseinrichtung (Mikroprozessor u. dgl.) vermindert auch die Anforderungen an diese.

Im allgemeinen unterscheiden sich die verschiedenen Fabrikate eines bestimmten Filmtyps ebenso geringfügig voneinander wie der Einfluß, den voneinander etwas abweichende Entwicklungsmaßnahmen hierauf haben, so daß ein bestimmtes Fenster hierfür ausreicht. Anders können die Verhältnisse jedoch liegen, wenn unterschiedliche Filmtypen betroffen sind, wie z. B. mit der Kamera aufgenommene Filme einerseits und kopierte Filme andererseits. In diesem Falle sind die Unterschiede größer, und für diesen Fall ist gemäß Anspruch 4 vorgesehen, das Fenster verstellbar einzurichten.

Völlig fehlende Transparenz ergibt auch hinsichtlich der entsprechenden analogen Spannung und des damit zusammenhängenden Digitalwertes einen deutlichen Unterschied zu den Extremwerten für Stegtransparenz. Völlig fehlende Transparenz ist z. B. im Bereich der Klebstellen zwischen zwei Filmen gegeben. Wegen des dort gewöhnlich vorgesehenen Aufklebers mit der Filmnummer, der trotz gänzlich fehlender Transparenz einen Extremwert für Stegtransparenz vortäuschen könnte, empfiehlt es sich, gemäß Anspruch 5 die fehlende Transparenz gesondert nur für die randnahen Filmbereiche festzustellen. Des weiteren ist es vorteilhaft, durch entsprechende Einrichtung des Fensters den sich für den Transparenzwert 0 ergebenden Wert der analogen Spannung aus dem Fenster herausfallen zu lassen.

Die Erfindung hat auch eine Vorrichtung zum Durchführen des. Verfahrens nach den Ansprüchen 1 bis 6 zum Gegenstand. Diese ist durch die in den Patentansprüchen 7 und 8 angegebenen Merkmale gekennzeichnet.

Die Erfindung wird nachstehend anhand der Zeichnung an einem Ausführungsbeispiel erläutert.

In der Zeichnung zeigt :

Fig. 1 eine erfindungsgemäße Vorrichtung zum Durchführen des Verfahrens nach der Erfindung in schematischer Darstellung mit den mechanischen Teilen in Ansicht von oben, und

Fig. 2 die mechanischen Teile der Vorrichtung aus Fig. 1 in Ansicht von der Seite.

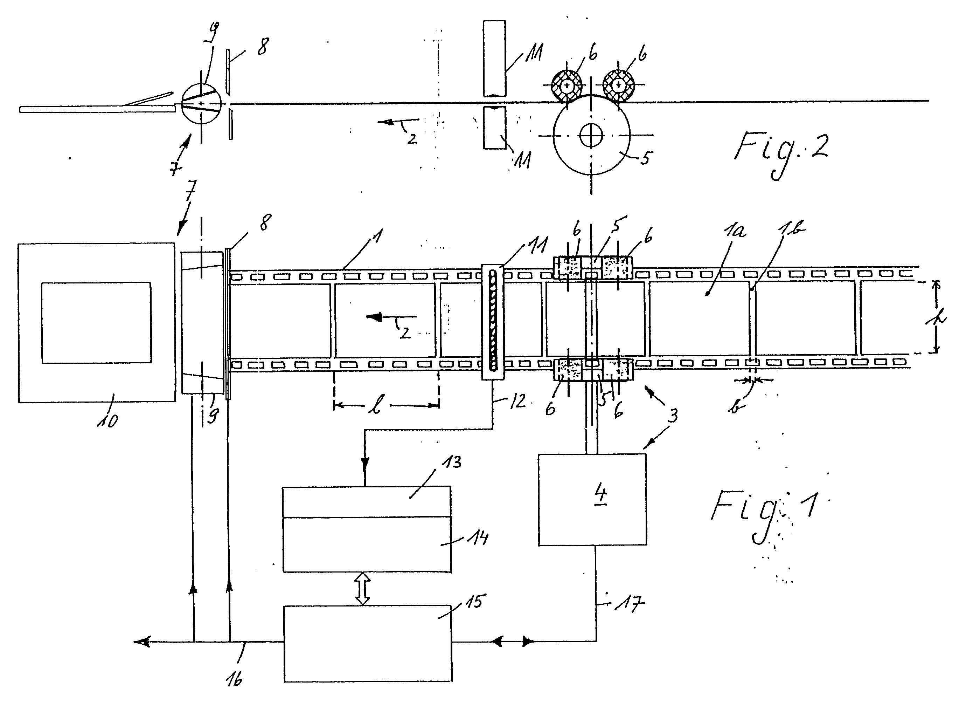

Die in der Zeichnung dargestellte Vorrichtung transportiert die Umkehrfilme 1, die Bildfelder 1a und dazwischen schwarze Bildstege 1b aufweisen, in Richtung des Pfeiles 2. Den Transport besorgt in Schritten, deren Länge dem Bruchteil der Breite b eines normalen Bildsteges 1b entspricht; eine Filmvorschubeinrichtung 3 mit einem Schrittmotor 4, der den Film über eine Walze 5 antreibt, auf der er mittels elastischer Druckrollen 6 in Kontakt gehalten wird, die mit dem Trommelumfang seitlich von dem Film 1 und durch dessen Perforation hindurch in Verbindung stehen.

Stirnseitig von dem voreilenden Filmende ist eine Rahmungsstation 7 mit Schneidvorrichtung 8 und Umlenkvorrichtung 9 angeordnet, die den ihr gegenüber bildsteggerecht positionierten Film 1 in Einzelbilder auftrennt und ggf. unbrauchbare Einzelstücke davon abtrennt und die Einzelbilder sowie die unbrauchbaren Stücke über die Leit- und Umlenkeinrichtung 9 in den bereitgestellten Rahmen 10 einführt, der dann automatisch geschlossen und durch einen neuen Rahmen ersetzt wird. Die Umlenkeinrichtung 9 wirkt wie eine Weiche, die unbrauchbare Filmstücke am Rahmen vorbei ablenkt und die zu rahmenden Einzelbilder in den Rahmen 10 leitet. Sie befindet sich zwischen dem Rahmen und der Schneidvorrichtung 8.

Im Abstand von hier mehr als zwei Filmbildlängen ist vor der Bearbeitungsstation 7 eine optoelektronische Abtasteinrichtung 11 angeordnet, die auf der einen Seite des Films eine Lichtquelle und auf der anderen mehrere über die Bildhöhe h verteilte Lichtmeßelemente, z. B. Fotodioden, aufweist, die eine der auf sie auftreffenden Leuchtstärke entsprechende analoge Spannung abgeben, wobei die einzelnen Spannungswerte in der Einrichtung 11 addiert werden, um diese als zu der gemessenen Gesamttransparenz analoge Spannung über eine Meßleitung 12 zu verlassen. Das Licht von der Lichtquelle erreicht die Lichtabtastelemente durch den Film 1 hindurch und durch einen engen, vorgeschalteten Lichtspalt, der sich parallel zu den Stegen 1b des Films 1 erstreckt und nur eine einen Bruchteil der Breite b eines normalen Filmstegs 1b entsprechende Breite aufweist. Somit wird immer nur die Gesamttransparenz gemessen, die der Film in einem sich senkrecht zu seiner Vorschubrichtung im wesentlichen über die Bildhöhe verteilenden Abtastbereich von dieser kleinen Spaltbreite hat. Die der gemessenen Gesamttransparenz entsprechende analoge Spannung wird über die Leitung 12 und ein elektronisches Fenster 13, das nur in einem vorgegebenen Wertebereich liegende Spannungswerte durchläßt, in einen analog/digital-Wandler (A/D-Wandler) eingegeben, der die ihn erreichende Spannung in bekannter Weise digitalisiert und in digitaler Form an eine Datenverarbeitungseinrichtung 15, z. B. einen Mikroprozessor, liefert, der auch Taktsignale von der Vorschubeinrichtung 4 empfängt und aus den eingegebenen Daten nach dem in den Patentansprüchen 1 bis 6 gekennzeichneten Verfahren die Lage der Bildstege 1b auf dem Film 1 vorschubbezogen ermittelt und Steuersignale errechnet, die zur stegorientierten Betätigung der Schneidvorrichtung 8 und der Umlenkvorrichtung 9 sowie weiterer für den Rahmungsbetrieb vorgesehener Einrichtungen einschließlich der Vorschubeinrichtung 3 dienen. Diese Steuersignale verlassen die Datenverarbeitungseinrichtung über die Leitung 16 und ggf. auch über die Leitung 17, die den Anschluß an die Vorschubeinrichtung bewirkt. Die Leitungen 16 und 17 haben selbstverständlich im Bedarfsfalle die für Eingangs- und Ausgangssignale ggf. unterschiedlicher Art benötigte Anzahl von Kanälen.

Die von dem D/A-Wandler je Vorschubtakt gelieferten Digitalwerte werden in der Datenverarbeitungseinrichtung 15 mindestens über die Zeitspanne gespeichert, die ein Punkt auf dem Film 1 bei der durch die Vorschubeinrichtung 3 vorgegebenen Vorschubgeschwindigkeit benötigt, um von der Abtasteinrichtung 11 zu der Schneidvorrichtung 8 zu gelangen. Mindestens über diese Zeit, ggf. aber auch auf längere Zeit bis hin zum Durchlauf eines ganzen Filmes stehen dann diese Digitalwerte für den Vergleich in der Datenverarbeitungseinrichtung zur Verfügung.

**Patentansprüche**

1. Verfahren zum automatischen Feststellen der Lage der Bildstege auf einem im Transport zu einer Bearbeitungsstation, z. B. einer Schneid- und Rahmungsstation, einer Kerbstation o. dgl. befindlichen Umkehrfilm zwecks an den Bildstegen orientierter Positionierung des Films an der Bearbeitungsstation, wobei der Film in Vorschubschritten, deren Größe nur einem Bruchteil der normalen Stegbreite entspricht, an einer optoelektronischen Abtasteinrichtung vorbeibewegt wird, die die Gesamttransparenz, die der Film in einem sich senkrecht zur Vorschubrichtung im wesentlichen über die Bildfeldhöhe verteilten Abtastbereich von nur einem Bruchteil der normalen Stegbreite entsprechender Breite aufweist, als analoge Spannung bereitstellt, deren sich im Verlaufe der Abtastung von mindestens einer normalen Bildlänge für die geringste Transparenz ergebende Extremwert (Spannungsextremwert) als der Transparenz des Bildsteges im abgetasteten Film (Stegtransparenz) entsprechend bewertet wird und wobei die analoge Spannung mittels eines Analog/Digital-Konverters digitalisiert wird und die Digital-Extremwerte gespeichert werden, dadurch gekennzeichnet, daß

a) die sich je Vorschubschritt ergebenden Digitalwerte alle über eine der Vorschubdauer von mehreren Bildfeldlängen entsprechende Zeitspanne gespeichert werden, und

b) die jeweils gespeicherten Digitalwerte miteinander verglichen werden und der dem Spannungs-Extremwert entsprechende Digital-Extremwert sowie die Digitalwerte, die innerhalb einer vorgegebenen Toleranz in der Nähe des Digital-Extremwertes liegen, bei einer Häufigkeit ihrer unmittelbaren Aufeinanderfolge, die der Stegbreite einschließlich einer vorgegebenen Toleranz entspricht, als einem Bildsteg zugehörig, und bei größerer Häufigkeit als unbelichteter Bildbereich bewertet werden.

2. Verfahren nach Anspruch 1, dadurch gekennzeichnet, daß die Lage der Stege auf dem Film aus dem Zeitpunkt der Messung sowie dem zeitlichen Abstand der dem Bildsteg zugewiesenen Digitalwertgruppen und der vom Film seither zurückgelegten Vorschubstrecke errechnet wird.

3. Verfahren nach Anspruch 1 oder 2, dadurch gekennzeichnet, daß nur die in einem Fenster zwischen einem oberen und einem unteren Grenzwert liegenden Werte der analogen Spannung digitalisiert werden, wobei das Fenster so gewählt wird, daß die sich bei normaler Stegtransparenz ergebenden Spannungsextremwerte im Abstand von den Grenzen in das Fenster fallen.

4. Verfahren nach Anspruch 3, dadurch gekennzeichnet, daß das Fenster verstellbar ist.

5. Verfahren nach einem der Ansprüche 1 bis 4, dadurch gekennzeichnet, daß völlig fehlende Transparenz gesondert für die randnahen Filmbereiche festgestellt wird.

6. Verfahren nach Anspruch 5, dadurch gekennzeichnet, daß das Fenster so gewählt wird, daß der sich für den Transparenzwert 0 ergebende Wert der analogen Spannung aus dem Fenster herausfällt.

7. Vorrichtung zum Durchführen des Verfahrens gemäß einem der Ansprüche 1 bis 6, gekennzeichnet durch

a) eine Filmvorschubeinrichtung (3) zum Verschieben des Films (1) der Länge nach in Schritten, deren Länge einem Bruchteil der Breite (b) eines normalen Filmsteges (1b) entspricht,

b) eine im Abstand von mehreren Bildlängen (1) vor der Bearbeitungsstation (7) angeordnete optoelektronische Abtasteinrichtung (11), die die Transparenz des Films (1) mindestens an mehreren, über die Höhe (h) der Bildfelder (1a) verteilten Abtaststellen einer einem Bruchteil der normalen Stegbreite (b) entsprechenden Breite mißt und eine dem gemessenen Gesamtwert entsprechende analoge Spannung liefert (12),

c) einen analog/digital-Wandler (14), der die analoge Spannung digitalisiert und

d) eine digitale Datenverarbeitungseinrichtung (15), die den vom analog/digital-Wandler (14) je Vorschubschritt gelieferten Digitalwert sowie vom Filmvorschub abhängige Signale empfängt und daraus Steuersignale errechnet und an die Bearbeitungsstation (7) liefert.

8. Vorrichtung nach Anspruch 7, gekennzeichnet durch ein elektronisches Fenster (13) zwischen der optoelektronischen Abtasteinrichtung (11) und dem analog/digital-Wandler (14), das nur Analogspannungen, die in einem vorbestimmten Wertebereich liegen, zu dem analog/digital-Wandler (14) hin durchläßt.

## Claims

1. A method of automatically detecting the position of the picture bars on a reversal film which is being transported to a processing station, for example a cutting and framing station, a notching station or the like, for the purposes of positioning the film at the processing station, such positioning being oriented to the picture bars, wherein in forward feed steps, the magnitude of which corresponds only to a fraction of the normal bar width, the film is moved past an optoelectronic sensing means which prepares the overall transparency that the film has in a sensing region which is distributed perpendicularly to the direction of feed movement substantially over the frame height and which is of a width corresponding only to a fraction of the normal bar width, in the form of an analog voltage whose extreme value (voltage extreme value) which is produced in the course of sensing of at least one normal picture length for the lowest level of transparency is evaluated as corresponding to the transparency of the picture bar in the sensed film (bar transparency), and wherein the analog voltage is digitised by means of an analog-digital converter and the digital extreme values are stored, characterised in that

a) the digital values which are produced in each forward feed step are all stored over a period corresponding to the forward feed duration of a plurality of frame lengths, and

b) the respectively stored digital values are compared to each other and the digital extreme value corresponding to the voltage extreme value as well as the digital values which lie within a predetermined tolerance in the vicinity of the digital extreme value, are evaluated as being associated with a picture bar when said values occur in direct succession at a frequency which corresponds to the bar width including a predetermined tolerance, and are evaluated as an unexposed picture area when the frequency is greater.

2. A method according to claim 1 characterised in that the position of the bars on the film is calculated from the time of the measurement operation and the spacing in respect of time of the groups of digital values allocated to the picture bar, and the forward feed distance which has been covered by the film since then.

3. A method according to claim 1 or claim 2 characterised in that only the values of the analog voltage which lie in a window between an upper and a lower limit value are digitised, the window being so selected that the voltage extreme values which are produced with normal bar transparency fall into the window at a spacing from the limits.

4. A method according to claim 3 characterised in that the window is adjustable.

5. A method according to one of claims 1 to 4 characterised in that total absence of transparency is detected separately for the regions of the film which are adjacent the edges.

6. A method according to claim 5 characterised in that the window is so selected that the value of the analog voltage, which is produced for the transparency value of 0 falls out of the window.

7. Apparatus for carrying out the method according to one of claims 1 to 6 characterised by

a) a film feed means (3) for displacement of the film (1) in respect of length in steps whose length corresponds to a fraction of the width (b) of a normal film bar (1b),

b) an opto-electronic sensing means (11) which is arranged at a spacing of a plurality of picture lengths (1) upstream of the processing station (7) and which measures the transparency of the film (1) at least at a plurality of sensing locations distributed over the height (h) of the frames (1a), the width of the sensing locations corresponding to a fraction of the normal bar width (b), the sensing means (11) supplying (12) an analog voltage corresponding to the measured total value,

c) an analog-digital converter (14) which digitises the analog voltage, and

d) a digital data processing means (15) which receives the digital value supplied by the analog-digital converter (14) for each forward feed step and signals which are dependent on the forward feed movement of the film, and calculates control signals therefrom and supplies them to the processing station (7).

8. Apparatus according to claim 7 characterised by an electronic window (13) between the opto-electronic sensing means (11) and the analog-digital converter (14), which transmits to the analog-digital converter (14) only analog voltages which lie in a predetermined range of values.

## Revendications

1. Méthode pour la détermination automatique des bords d'image d'un film positif se trouvant transporté à un poste de traitement, par exemple à un poste de montage ou d'encadrement, à un poste pour entailles ou à un poste semblable, pour le positionnement du film sur le poste de traitement en fonction des bords d'image, le film étant avancé, par pas dont la longueur ne représente qu'une fraction de la largeur de bords normale, à côté d'un dispositif de palpage optoélectronique qui présente la transparence totale d'une zone de palpage que présente le film, dont la largeur correspond à une fraction de la largeur de bord normale et qui est perpendiculaire par rapport à la direction de l'avancement et se répartit substantiellement sur la hauteur du champs de l'image, ladite transparence totale s'exprimant par une tension analogique dont la valeur extrême (valeur extrême de tension) qui résulte en cours d'un palpage d'au moins une longueur d'image normale pour la transparence la plus faible est évaluée comme transparence du bord d'image dans le film palpé (transparence de bord), la tension analogique étant digitalisée au moyen d'un convertisseur analogique/digital et mémorisée comme valeur extrême digitale, caractérisée en ce que

a) les valeurs digitales résultant par pas d'avancement sont toutes mémorisées pendant une période correspondant à une durée d'avancement de plusieurs longueurs de champs d'image et que

b) les valeurs digitales mémorisées sont comparées entre elles et que la valeur digitale extrême correspondant à la valeur de tension extrême ainsi que les valeurs digitales qui se situent à l'intérieur d'une tolérance à proximité de la valeur digitale extrême, lorsqu'elles ont une fréquence dans leur succession directe qui correspond à la largeur de bords y compris une tolérance indiquée, sont évaluées comme appartenant à un bord d'image et lorsque leur fréquence est plus grande, sont évaluées comme zones d'image non exposées.

2. Procédé selon la revendication 1, caractérisé en ce que la position des bords sur le film est calculée à partir du moment de la mesure ainsi que de l'écart dans le temps des groupes de valeurs digitales attribués aux bords d'image ainsi que du trajet d'avancement parcouru depuis par le film.

3. Procédé selon les revendications 1 ou 2, caractérisé en ce que les valeurs de la tension analogique sont digitalisées dans une fenêtre entre une valeur limite supérieure et une valeur limite inférieure, la fenêtre étant choisie de manière à ce que les valeurs extrêmes de tension résultant d'une transparence de bord normale tombent à distance des limites dans la fenêtre.

4. Procédé selon la revendication 3, caractérisé en ce que la fenêtre peut être déplacée.

5. Procédé selon l'une des revendications 1 à 4, caractérisé en ce qu'une transparence nulle est relevée séparément pour les zones de film proche du bord.

6. Procédé selon la revendication 5, caractérisé en ce que la fenêtre est choisie de manière à ce que la valeur de la tension analogique résultant de la valeur de transparence 0 se situe en dehors de la fenêtre.

7. Dispositif pour l'exécution de la méthode selon les revendications 1 à 6, caractérisé en ce que

a) un dispositif d'avancement du film (3) pour déplacer le film (1) dans le sens de la longueur par pas dont la longueur correspond à une fraction de la largeur (b) d'un bord de film (1b) est prévu, que

b) un dispositif de palpage optoélectronique (11) est disposé à distance de plusieurs longueurs d'image (1) en amont du poste de traitement (7), qui mesure, sur une largeur correspondant à une fraction de la largeur de bord (b) normale, la transparence du film (1) au moins en plusieurs points de palpage distribués sur la hauteur (h) des champs d'image (1a) et fournit une tension (12) analogique correspondant à la valeur totale mesurée,

c) qu'un convertisseur analogique/digital (14) qui digitalise la tension analogique est prévu et que

d) un dispositif de traitement de données digital (15) qui reçoit la valeur digitale fournie par le convertisseur analogique/digital (14) par pas d'avancement ainsi que des signaux qui correspondent à l'avancement du film ou à des facteurs semblables en calcule des signaux de commande et les fournit au poste de traitement (7).

8. Dispositif selon la revendication 7, caractérisé en ce qu'une fenêtre électronique (13) est prévue entre le dispositif de palpage optoélectronique (11) et le convertisseur analogique/digital (14), qui ne laisse passer que des tensions analogiques vers le convertisseur analogique/digital (14) qui se situent dans une plage de valeurs prédéterminée.

Fig. 2

Fig. 1

EP 0 177 703 B1